**Europäisches Patentamt**

**European Patent Office**

**Office européen des brevets**

(19)

(11) Veröffentlichungsnummer: **0 049 733**

**A1**

(12)

# EUROPÄISCHE PATENTANMELDUNG

(21) Anmeldenummer: **81104711.7**

(22) Anmeldetag: **19.06.81**

(51) Int. Cl.³: **C 04 B 13/21**
**C 04 B 31/00**

(30) Priorität: **09.10.80 GR 63097**

(43) Veröffentlichungstag der Anmeldung:
**21.04.82 Patentblatt 82/16**

(84) Benannte Vertragsstaaten:
**AT BE CH DE FR GB IT LI LU NL SE**

(71) Anmelder: **Karapanos, Thomas**
**Zaimi 6 Street**
**Katerini(GR)**

(71) Anmelder: **Mavropoulos, Theodorus**
**Oinois 21 Street**
**Katerini(GR)**

(72) Erfinder: **Karapanos, Thomas**
**Zaimi 6 Street**
**Katerini(GR)**

(72) Erfinder: **Mavropoulos, Theodorus**
**Oinois 21 Street**
**Katerini(GR)**

(74) Vertreter: **Lehn, Werner, Dipl.-Ing. et al,**
**Hoffmann, Eitle & Partner Patentanwälte**
**Arabellastrasse 4 (Sternhaus)**
**D-8000 München 81(DE)**

(54) **Fliessfähige Masse aus Wasser, Füll- und Bindematerialien sowie Verwendung dieser Masse zum Formen oder Giessen von Bauelementen mit Isoliereigenschaften und Bauelement in Form einer Platte, eines Blockes oder eines Paneeles.**

(57) Zur Herstellung von Bauelementen, beispielsweise Wänden, Ziegeln oder Blöcken, welche gute Isoliereigenschaften sowohl hinsichtlich Kälte und Wärme, als auch gegenüber Feuchtigkeit Trittschall aufweisen und darüber hinaus leicht bearbeitbar, problemlos einfärbbar und generell für jede Art von architektonischer Gestaltung geeignet sind, wird eine fließfähige Masse mit folgenden Bestandteilen vorgesehen:

- aufblähbarer Perlit,
- gemahlener Reis,
- Amiant in Puder- oder Faserform,
- Sägespäne,
- Asche in Puderform,
- Bimsstein,
- poröse Plastikmasse, wie beispielweise Felisol,
- Reishülsen,
- halbweißer Zement,
- Sand, und
- Marmor in Puderform

EP 0 049 733 A1

Croydon Printing Company Ltd.

**Fließfähige Masse aus Wasser, Füll- und Bindematerialien sowie Verwendung dieser Masse zum Formen oder Gießen von Bauelementen mit Isoliereigenschaften und Bauelement in Form einer Platte, eines Blockes oder eines Paneeles**

Die vorliegende Erfindung bezieht sich auf eine fließfähige Masse aus Wasser, Füll- und Bindematerialien. Sie bezieht sich ferner auf die Verwendung einer derartigen fließfähigen Masse zum Formen oder Gießen von Bauelementen mit Isoliereigenschaften, wie beispielsweise Platten, Wänden, Ziegeln, Blöcken, Rohren und dergleichen. Sie betrifft ferner ein Bauelement in Form einer Platte ohne oder mit Überzug sowie in Form eines Blockes oder Paneeles.

Bekannte fließfähige Massen aus Wasser, Füll- und Bindematerialien, wie beispielsweise flüssiger Beton oder andere fließfähige Mischungen, ergeben Bauelemente bzw. Bauteile, die stets entweder hohe Festigkeiten und geringe Isoliereigenschaften oder ausgezeichnete Isoliereigenschaften und nur geringe Festigkeit aufweisen. Andere Mischungen wiederum haben gute Isoliereigenschaften in bezug auf Kälte oder Wärme, jedoch geringe Isoliereigenschaften in bezug auf Feuchtigkeit. Darüber hinaus sind die Bearbeitungsmöglichkeiten der durch derartige fließfähige Massen hergestellte Bauelemente sehr unterschiedlich. Häufig lassen sich Bauelemente hoher Festigkeit nur schwer und Bauelemente mit guten Isoliereigenschaften in bezug auf Kälte oder Wärme relativ leicht bearbeiten.

Eine fließfähige Masse zur Schaffung von leicht bearbeitbaren Bauelementen mit vielseitigen Isoliereigenschaften und guten Festigkeitseigenschaften ist bisher nicht bekannt. Hier soll die Erfindung Abhilfe schaffen.

0049733

Aufgabe der vorliegenden Erfindung ist es deshalb, eine fließfähige Masse zu schaffen, die die Herstellung von Elementen ermöglicht, welche gute Isoliereigenschaften sowohl hinsichtlich Kälte und Wärme, als auch gegenüber Feuchtigkeit und Trittschall aufweisen. Die Elemente sollen darüber hinaus leicht bearbeitbar, problemlos einfärbbar und generell für jede Art von architektonischer Gestaltung geeignet und sowohl innen und außen einsetzbar sein.

Diese Aufgabe wird durch eine fließfähige Masse gelöst, die die im Patentanspruch 1 aufgeführten Bestandteile enthält.

Besonders vorteilhafte Eigenschaften ergeben sich bei einer Zusammensetzung, wie sie in den Patentansprüchen 2, 3 oder 4 gekennzeichnet ist.

Die erfindungsgemäße fließfähige Masse eignet sich insbesondere zum Formen oder Gießen von Bauelementen mit Isoliereigenschaften. Diese Bauelemente können in der verschiedensten Weise gestaltet sein. Sie können die Form von Wänden, Ziegeln oder Blöcken, Rohren, Kanalabschnitten oder Fertigteilen verschiedenster Art aufweisen. Selbstverständlich ist es auch möglich, die erfindungsgemäße fließfähige Masse für das Ausgießen von sogenannten verlorenen Schalungen oder anderen Bauteilen einzusetzen. Ferner ist es möglich, die erfindungsgemäße fließfähige Masse zur Herstellung von schalenartigen Bauelementen zu verwenden, die dann mit Beton oder einem anderen Material ausgegossen werden können.

Die erfindungsgemäße fließfähige Masse eignet sich nicht nur zur Herstellung von innen liegenden Bauelementen, sondern auch zur Herstellung von Außenwänden, Fassadenplatten, Terrassen und außen liegenden Fertigteilen.

Aufgabe der vorliegenden Erfindung ist es ferner, ein Bauelement zu schaffen, das die oben angegebenen Vorteile in bezug auf die Isoliereigenschaften und die Bearbeitung aufweist.

Diese Aufgabe wird erfindungsgemäß durch ein Bauelement erreicht, das aus den in den Patentansprüchen 6, 7 oder 8 angegebenen Bestandteilen besteht.

Zur Herstellung von Bauelementen der erfindungsgemäßen Art ist es zweckmäßig, zunächst entsprechend dem Verwendungszweck den gewünschten Wärmedurchgangskoeffizienten festzulegen und die Zusammensetzung der Materialien entsprechend diesem Wert zu wählen. Gegebenenfalls kann die eine oder andere Komponente zur Erzielung des gewünschten Ergebnisses in einem größeren oder einem kleineren Anteil eingesetzt bzw. ggfs. vollkommen weggelassen werden. Auch können durch Zusatz weiterer Materialien die Eigenschaften der herzustellenden Bauelemente in der einen oder anderen Richtung entsprechend dem jeweils gewünschten Verwendungszweck geändert werden.

Die erfindungsgemäß verwendeten Materialien gehören im Prinzip zwei Kategorien an. Der einen Kategorie sind die Isoliermaterialien und der anderen Kategorie die Bindematerialien zuzurechnen.

Als Isoliermaterialien (mit Eigenschaften zur Wärme-, Kälte- und Schalldämmung) werden folgende Materialien angesehen:

1. aufblähbarer Perlit
2. gemahlener Reis
3. Amiant in Puder- oder Faserform
4. Sägespäne
5. Asche in Puderform (mit Eigenschaften zur Enthärtung des Wassers)
6. Bimsstein (mit Bläheigenschaften)
7. Poröse Plastikmassen, wie beispielsweise Felisol (mit Bläheigenschaften)
8. Reishülsen (mit Bläheigenschaften) als Füllstoff zur Herabsetzung des Gewichtes.

Als Bindematerialien sind anzusehen:

9. halbweißer Zement (mit Bläheigenschaften)
1o. Sand mit Bindeeigenschaften
11. Marmor in Puderform (als Deckmittel)

Die obigen Materialien ergeben, zusammen mit einer entsprechenden Menge Wasser, erfindungsgemäß eine fließfähige Masse, mit der durch Gießen mit Formen die erfindungsgemäßen Bauelemente hergestellt werden können. Sobald der Trocknungsvorgang abgeschlossen ist, können die Bauelemente den Gießformen entnommen werden.

Auf die erfindungsgemäße Weise hergestellte Rohre eignen sich aufgrund ihrer guten Isoliereigenschaften für den Transport von Flüssigkeiten, deren Temperatur während des Transportes möglichst konstant gehalten werden soll.

Im folgenden sind drei Wege zur Ausführung der Erfindung anhand von Beispielen erläutert.

Beispiel 1

Zur Herstellung von Platten in verschiedenen Größen ohne Überzug wurde für die fließfähige Masse folgende Zusammensetzung gewählt:

1. 64,6o Vol-% aufblähbarer Perlit,
2. 4,2o " Bimsstein,
3. 13,oo " Reishülsen,
4. 4,8o " Zement,
5. 1,8o " Sand, und
6. 11,6o " Wasser.

Beispiel 2

Zur Herstellung von Platten in verschiedenen Größen mit Überzug wurde für die fließfähige Masse folgende Zusammensetzung gewählt:

1. 56,5o Vol-% aufblähbarer Perlit,
2. 5,oo " gemahlener Mais,
3. 4,oo " Bimsstein,
4. 12,3o " Reishülsen,
5. 4,9o " Zement,
6. 1,7o " Sand,
7. 2,45 " Marmor in Puderform,
8. 1,23 " Weiß-Zement,
9. 11,87 " Wasser, und
1o. o,o5 " Dichtungsmaterial.

Beispiel 3

Zur Herstellung von Blöcken und Paneelen in verschiedenen Größen und Stärken mit Überzug wurde für die fließfähige Masse folgende Zusammensetzung gewählt:

1. 53,7 Vol-% aufblähbarer Perlit,
2. 3,0 " Amiant,
3. 1,2 " Sägespäne,
4. 1,2 " Asche in Puderform,
5. 3,6 " Bimsstein,
6. 0,6 " poröse Plastikmasse,
7. 12,2 " Reishülsen,
8. 5,4 " Zement,
9. 1,8 " Sand,
10. 2,4 " Marmor in Puderform
11. 1,2 " Weißzement,
12. 13,2 " Wasser, und
13. 0,5 " Dichtungsmaterial.

- 7 -

Patentansprüche

1. Fließfähige Masse aus Wasser, Füll- und Bindematerialien, dadurch g e k e n n z e i c h n e t , daß sie

   - aufblähbaren Perlit,
   - gemahlenen Reis,
   - Amiant in Puder- oder Faserform,
   - Sägespäne,
   - Asche in Puderform,
   - Bimsstein,
   - poröse Plastikmasse, wie beispielsweise Felisol,
   - Reishülsen,
   - halbweißen Zement,
   - Sand, und
   - Marmor in Puderform

   enthält.

2. Fließfähige Masse aus Füll- und Bindematerialien,
   dadurch g e k e n n z e i c h n e t , daß sie

   - 64,60 Vol-% aufblähbaren Perlit,
   - 4,20 " Bimsstein,
   - 13,00 " Reishülsen,
   - 4,80 " Zement,
   - 1,80 " Sand, und
   - 11,60 " Wasser

   enthält.

3. Fließfähige Masse aus Füll- und Bindematerialien,
   dadurch g e k e n n z e i c h n e t , daß sie

- 56,5o Vol-% aufblähbaren Perlit,
- 5,oo   "      gemahlenen Mais,
- 4,oo   "      Bimsstein,
- 12,3o  "      Reishülsen,
- 4,9o   "      Zement,
- 1,7o   "      Sand,
- 2,45   "      Marmor in Puderform,
- 1,23   "      Weiß-Zement,
- 11,87  "      Wasser, und
- o,o5   "      Dichtungsmaterial

enthält.

4. Fließfähige Masse aus Füll- und Bindematerialien,
dadurch g e k e n n z e i c h n e t , daß sie

- 53,7 Vol-% aufblähbaren Perlit,
- 3,o   "      Amiant,
- 1,2   "      Sägespäne,
- 1,2   "      Asche in Puderform,
- 3,6   "      Bimsstein,
- o,6   "      poröse Plastikmasse,
- 12,2  "      Reishülsen,
- 5,4   "      Zement,
- 1,8   "      Sand,
- 2,4   "      Marmor in Puderform,
- 1,2   "      Weißzement,
- 13,2  "      Wasser, und
- o,5   "      Dichtungsmaterial

enthält.

5. Verwendung einer fließfähigen Masse nach Anspruch 1, 2, 3 oder 4 zum Formen oder Gießen von Bauelementen mit Isoliereigenschaften, wie beispielsweise Platten, Wänden, Ziegeln, Blöcken, Rohren und dergleichen.

6. Bauelement, dadurch g e k e n n z e i c h n e t , daß es aus

- aufblähbarem Perlit,
- gemahlenem Reis,
- Amiant in Puder- oder Faserform,
- Sägespänen,
- Asche in Puderform,
- Bimsstein,
- poröser Plastikmasse, wie beispielsweise Felisol,
- Reishülsen,
- halbweißem Zement,
- Sand, und
- Marmor in Puderform

besteht.

7. Bauelement in Form einer Platte ohne Überzug, dadurch g e k e n n z e i c h n e t , daß es aus

- 73,08 Vol-% aufblähbarem Perlit,
- 4,75 " Bimsstein,
- 14,71 " Reishülsen,
- 5,43 " Zement, und
- 2,03 " Sand

besteht.

8. Bauelement in Form einer Platte mit Überzug, dadurch g e k e n n z e i c h n e t , daß es aus

- 64,11 Vol-% aufblähbarem Perlit,
- 5,67 " gemahlenem Mais,
- 4,54 " Bimsstein,
- 13,96 " Reishülsen,
- 5,56 " Zement,
- 1,93 " Sand,
- 2,78 " Marmor in Puderform
- 1,39 " Weiß-Zement, und
- o,o6 " Dichtungsmaterial

besteht.

9. Bauelement in Form eines Blockes oder Paneeles mit Überzug, dadurch g e k e n n z e i c h n e t , daß es aus

- 61,87 Vol-% aufblähbarem Perlit,
- 3,46 " Amiant,
- 1,38 " Sägespänen,
- 1,38 " Asche in Puderform,
- 4,15 " Bimsstein,
- o,69 " poröser Plastikmasse,
- 14,o6 " Reíshülsen,
- 6,22 " Zement,
- 2,o7 " Sand,
- 2,76 " Marmor in Puderform,
- 1,38 " Weißzement, und
- o,58 " Dichtungsmaterial

besteht.

Europäisches
Patentamt

**EUROPÄISCHER RECHERCHENBERICHT**

## EINSCHLÄGIGE DOKUMENTE

| Kategorie | Kennzeichnung des Dokuments mit Angabe soweit erforderlich, der maßgeblichen Teile | betrifft Anspruch |
|---|---|---|
| A | DE - A1 - 2 449 385 (DRACHOLIN CHEMISCHE FABRIK E.U.H. FRITZ) -- | |
| A | DE - U - 1 969 032 (SCHLACKENAUFBE- REITUNG GMBH & CO.) -- | |
| A | DE - A - 2 136 117 (E.I. ROBINSKY et al.) -- | |
| A | GB - A - 931 207 (BUILDING RESEARCH) -- | |
| A | DE - A - 2 304 478 (P. MATHIS) ---- | |

**KLASSIFIKATION DER ANMELDUNG (Int Cl.³)**

C 04 B 13/21
C 04 B 31/00

**RECHERCHIERTE SACHGEBIETE (Int. Cl.³)**

C 04 B 7/35
C 04 B 13/00
C 04 B 15/00
C 04 B 21/00
C 04 B 31/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 13-11-1981 | STROUD |

EPA form 1503.1  06.78